# EUROPEAN PATENT SPECIFICATION

(11) **EP 3 958 382 B1**
(45) Date of publication and mention of the grant of the patent: **04.03.2026**
(21) Application number: 20866929.1
(22) Date of filing: 18.06.2020
(51) Int. Cl.: H01M 50/244, H01M 50/291, H01M 50/204, H01M 50/289, H01M 50/35, H01M 50/209, H01M 50/342, H01M 50/30

(54) **BATTERY PACK HAVING PRESSURE RELIEF STRUCTURE**
BATTERIEPACK MIT DRUCKENTLASTUNGSSTRUKTUR
BLOC-BATTERIE POSSÉDANT UNE STRUCTURE DE DÉCOMPRESSION

(43) Date of publication of application: 23.02.2022
(73) Proprietor: Ningde Amperex Technology Ltd., Ningde, Fujian 352100 (CN)
(72) Inventor: YUAN, Hongwei, Dongguan, Guangdong 523808 (CN); WANG, Shenbo, Dongguan, Guangdong 523808 (CN); LI, Xiang, Ningde, Fujian 350900 (CN); WU, Kecheng, Dongguan, Guangdong 523808 (CN)
(74) Representative: Kraus & Lederer PartGmbB
(86) International application number: PCT/CN2020/096850
(87) International publication number: WO 2021/253334

(56) References cited:
- CN-A- 102 130 313
- CN-A- 106 469 791
- CN-A- 106 469 791
- CN-U- 206 490 119
- CN-U- 207 818 695
- CN-U- 209 947 879
- KR-A- 20170 082 262
- US-B2- 10 665 835

## Description

### TECHNICAL FIELD

The application relates to a battery pack, in particular to a battery pack with a pressure relief structure.

### BACKGROUND

During packaging, an existing battery pack needs to be filled with glue inside a housing thereof and the glue is filled around a cell assembly, which results in no pressure relief channel in the housing of the battery pack and around the battery pack, so the battery pack has a risk of explosion. As relevant prior art the following document is mentioned: US10665835B2.

### SUMMARY

To this end, it is necessary to provide a battery pack to solve the problem above.

Disclosed by the application is a battery pack with a pressure relief structure, comprising: a housing, provided with an accommodating cavity; a cell assembly, accommodated in the accommodating cavity; a spacer, arranged between a first side of the cell assembly and the housing and provided with an air vent; a pressure relief part, arranged on the housing, wherein the pressure relief part is in contact with the spacer or an air channel is formed therebetween; and glue, filled in a gap between at least partial regions outside the first side of the cell assembly and the housing and used for fixing the cell assembly and the housing.

According to the application, the cell assembly comprises a cell body and a tab. The cell body is provided with a top seal at the first side. The tab is arranged in the cell body and extends out of one side of the top seal. The top seal is provided with at least one weak region enabling gas in the cell body to flow out of the cell body when the weak region is impacted by the gas. The spacer is arranged between the top seal and the housing and separates the glue and the weak region.

According to some embodiments of the application, the spacer is attached to the weak region on the top seal, or an air channel is formed between the spacer and the weak region, the spacer is provided with a protruding part, and the protruding part protrudes from the top seal and extends to the pressure relief part.

According to some embodiments of the application, the cell assembly further comprises a bracket supporting the tab, and the bracket presses the spacer on the top seal.

According to some embodiments of the application, the cell assembly comprises a cell body and a tab. The tab is arranged in the cell body and extends out of the cell body. At least one side seal is arranged at the first side of the cell body, and the side seal is located at one side of the tab. The side seal is provided with at least one weak region enabling gas in the cell body to flow out of the cell body when the weak region is impacted by the gas, and the spacer is arranged between the side seal and the housing, and separates the glue and the weak region.

According to some embodiments of the application, the spacer is attached to the weak region on the side seal, or an air channel is formed between the spacer and the weak region, the spacer is provided with a protruding part, and the protruding part protrudes from the side seal and extends to the pressure relief part.

According to some embodiments of the application, multiple cell assemblies are provided, the spacer fills the gap between two of the cell assemblies, and the spacer is provided with an avoidance hole to leave a space for the cell assemblies to deform.

According to some embodiments of the application, the pressure relief part is an air vent structure arranged on the housing, and the spacer at least partially extends into the pressure relief part or is attached thereto.

According to some embodiments of the application, the battery pack further comprises an adhesive tape, and the adhesive tape is bonded to the exterior of the housing and covers the pressure relief part.

According to some embodiments of the application, the adhesive tape is in a dustproof and waterproof structure.

According to some embodiments of the application, a cutter line is formed in the adhesive tape.

According to some embodiments of the application, the pressure relief part is a weak structure arranged on the housing and separated from the housing when being impacted by the gas in the cell assembly.

According to some embodiments of the application, the glue is also filled between the first side of the cell assembly and the housing.

The battery pack is provided with the spacer with the air vent, the spacer is arranged between the first side of the cell assembly and the housing, and the glue is filled in the gap between at least partial regions outside the first side of the cell assembly and the housing, so that no glue exists between the spacer and the cell assembly and a pressure relief channel for gas is formed. The housing is provided with the pressure relief part which is in contact with the spacer or has an air channel therewith, so that no glue exists between the spacer and the pressure relieve part and a pressure relief channel for gas is formed. Therefore, gas in the cell battery is discharged out of the cell assembly, and then discharged out of the battery pack through the pressure relief channel, the air vent and the pressure relief part.

### BRIEF DESCRIPTION OF DRAWINGS

FIG. 1 is a structure diagram of a battery pack according to one embodiment of the application;
FIG. 2 is a breakdown structure diagram of the battery pack as shown in FIG. 1;

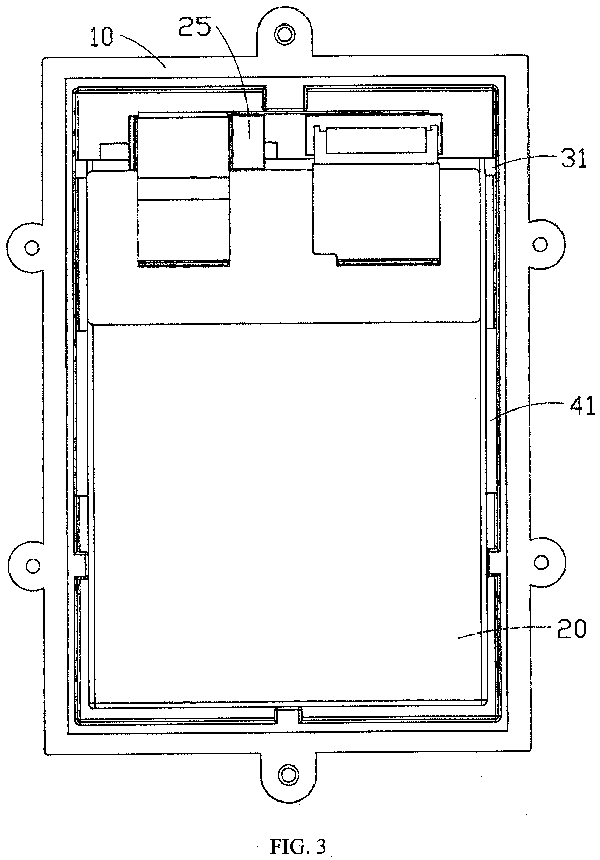

FIG. 3 is a structure diagram of the battery pack as shown in FIG. 1 along a direction A;
FIG. 4 is a structure diagram of the battery pack as shown in FIG. 1 after removal of a housing; and
FIG. 5 is a breakdown structure diagram of the battery pack as shown in FIG. 4.

### Description of Reference Signs Of Main Elements:

| | |
|---|---|
| Battery pack | 100 |
| Housing | 10 |
| Accommodating cavity | 101 |
| Pressure relief part | 11, 13 |
| Groove | 15 |
| Cell assembly | 20 |
| Weak region | 201, 203 |
| Gap | 205 |
| Cell body | 21 |
| Top seal | 211 |
| Accommodating groove | 2111 |
| Side seal | 213 |
| Side surface | 215 |
| Tab | 23 |
| Bracket | 25 |
| Spacer | 30, 40 |
| Protruding part | 31, 41 |
| Avoidance hole | 43 |
| Adhesive tape | 50, 60 |
| Glue | 200 |

The application will be further described in the following detailed description of the embodiments with reference to the above drawings.

### DETAILED DESCRIPTION OF EMBODIMENTS

The technical solutions in the embodiments of the application will be clearly and completely described below in conjunction with the drawings in the embodiments of the application. Obviously, the described embodiments are only some, not all of the embodiments of the application.

Unless otherwise defined, all technical and scientific terms used herein have the same meaning as those generally understood by those skilled in the art belonging to the technical field of the application. All terms used in the Description of the application only aim to describe the specific embodiments and are not intended to limit the application.

Disclosed by some implementations of the application is a battery pack with a pressure relief structure, comprising: a housing, provided with an accommodating cavity; a cell assembly, accommodated in the accommodating cavity; a spacer, arranged between a first side of the cell assembly and the housing and provided with an air vent; a pressure relief part, arranged on the housing, wherein the pressure relief part is in contact with the spacer or an air channel is formed therebetween; and glue, filled in a gap between at least partial regions outside the first side of the cell assembly and the housing and used for fixing the cell assembly and the housing.

The battery pack is provided with the spacer with the air vent, the spacer is arranged between the first side of the cell assembly and the housing, and the glue is filled in the gap between at least partial regions outside the first side of the cell assembly and the housing, so that no glue exists between the spacer and the cell assembly and a pressure relief channel for gas is formed. The housing is provided with the pressure relief part which is in contact with the spacer or has an air channel therewith, so that no glue exists between the spacer and the pressure relieve part and a pressure relief channel for gas is formed. Therefore, gas in the cell battery is discharged out of the cell assembly, and then discharged out of the battery pack through the pressure relief channel, the air vent and the pressure relief part.

Some implementations of the application are elaborated in conjunction with the accompanying drawings. Without conflict, the following embodiments and features in these embodiments can be combined with each other.

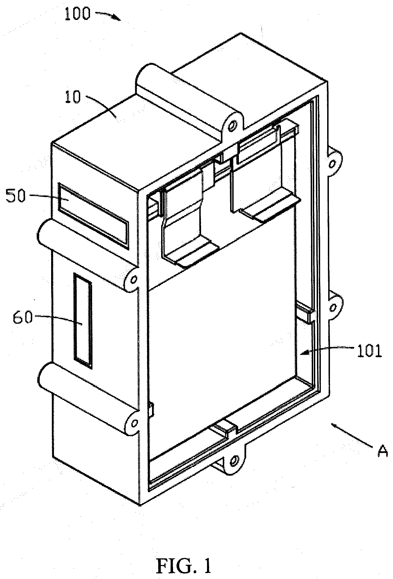

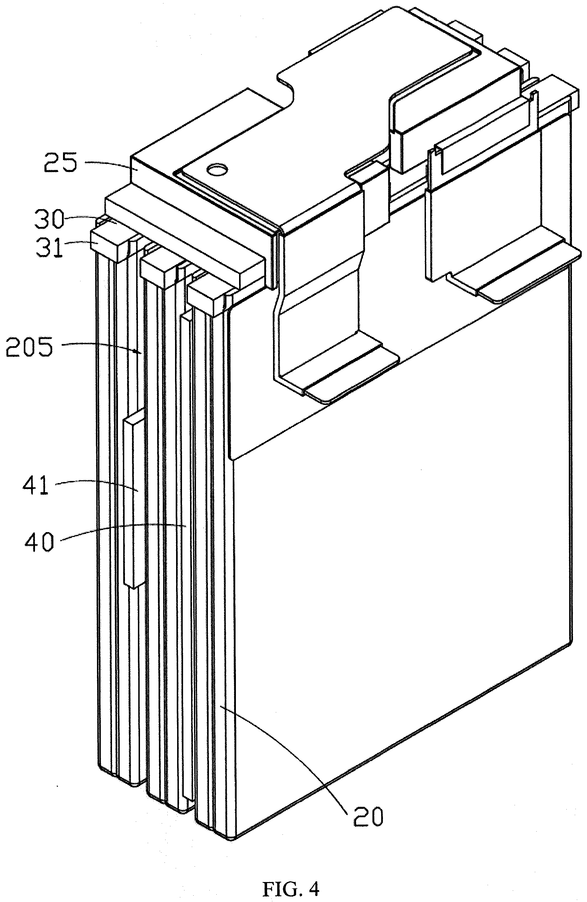

Referring to FIG. 1 and FIG. 4 at the same time, disclosed by an embodiment of the application is a battery pack 100 with a pressure relief structure. The battery pack 100 comprises a housing 10, a cell assembly 20 and a spacer. In one embodiment, the spacer comprises a spacer 30 and a spacer 40. The housing 10 is provided with an accommodating cavity 101. The cell assembly 20, the spacer 30 and the spacer 40 are respectively accommodated in the accommodating cavity 101 of the housing 10.

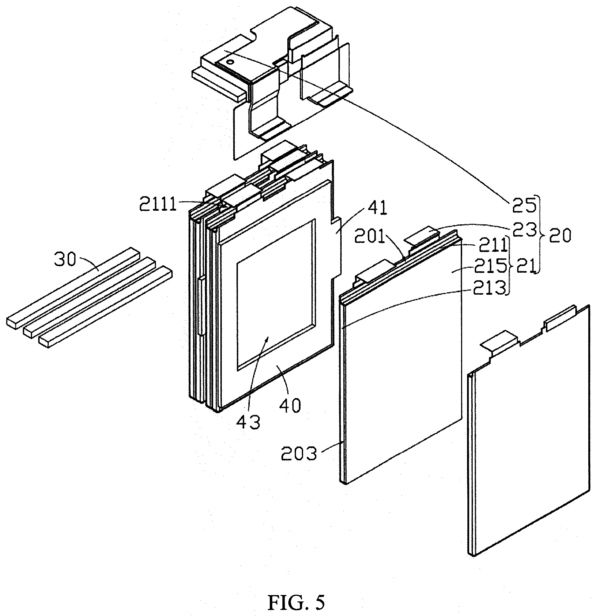

Referring to FIG. 4 and FIG. 5, the cell assembly 20 comprises a cell body 21 and a tab 23. The cell body 21 comprises a top seal 211 and side seals 213 located at both sides of the top seal 211. The tab 23 is arranged in the cell body 21 and extends out of the top seal 211. Both ends of the top seal 211 are connected to the two side seals 213. The spacer is arranged between a first side of the cell assembly 20 and the housing 10. The first side comprises one side of each of the top seal 211 and the side seal 213 of the cell body 21, that is, the spacer 30 is located between the top seal 211 of the cell assembly 20 and the housing 10, and the spacer 40 is located between the side seal 213 of the cell assembly 20 and the housing 10. Air vents (not shown) are formed in the spacer 30 and the spacer 40 respectively.

Glue 200 is filled in the accommodating cavity 101. The glue 200 is filled in a gap between at least partial regions outside the first side of the cell assembly 20 and the housing 10. In one embodiment, the glue 200 is filled in the whole gaps among the cell assembly 20, the spacer 30 and the housing 10, but is not filled between the spacer 30 and the top seal 211 of the cell body 21 and between the spacer 40 and the side seal 213 of the cell body 21, but it is not limited thereto. For example, in other embodiments, the glue 200 may also be filled in the gaps among the cell assembly 20, the spacer 30 and the housing 10, as long as the glue 200 can fix the cell assembly 20 and the housing 10. When the battery pack 100 is applied to a vibrating environment, the structural shock resistance and fixing strength of the battery pack 100 are improved. In some embodiments, the glue 200 is also filled between the first side of the cell assembly and the housing.

Referring to 2, the housing 10 is provided with a pressure relief part 11 and a pressure relief part 13. The pressure relief part 11 is in contact with the spacer 30 or an air channel is formed therebetween to prevent the glue 200 from entering the space between the pressure relief part 11 and the spacer 30. The spacer 30 is in contact with the top seal 211 of the cell body 21 or an air channel is formed therebetween to prevent the glue 200 from entering the space between the spacer 30 and the top seal 211. After the gas in the cell assembly 20 is discharged out of the cell body 21 from the top seal 211, the gas may flow directly through the air vent of the spacer 30 to the space between the pressure relief part 11 and the spacer 30; the gas may also flow through the air vent of the spacer 30 to the space between the pressure relief part 11 and the spacer 30 after passing through the air channel between the spacer 30 and the top seal 211. After passing through the air channel between the pressure relief part 11 and the spacer 30, the gas is discharged from the pressure relief part 11 to the housing 10, or the gas is directly discharged from the pressure relief part 11 to the housing 10.

The pressure relief part 13 is in contact with the spacer 40 or an air channel is formed therebetween to prevent the glue 200 from entering the space between the pressure relief part 13 and the spacer 40. The spacer 40 is in contact with the side seal 213 of the cell body 21 or an air channel is formed therebetween to prevent the glue 200 from entering the space between the spacer 40 and the side seal 213. After the gas in the cell assembly 20 is discharged out of the cell body 21 from the top seal 211 to the cell body 21, the gas flows to the space between the spacer 40 and the side seal 213, and flows through the air vent of the spacer 40 to the space between the spacer 40 and the pressure relief part 13, and is finally discharged out of the housing 10 from the pressure relief part 13.

The spacer 30 and the spacer 40 are in air-permeable structures made of air-permeable materials. For example, the material of the spacer 30 and the spacer 40 is foam or sponge, or the like.

Referring to FIG. 5, the cell assembly 20 is provided with a weak region 201 that allows the gas to flow out of the cell assembly 20 when the weak region impacted by the gas in the cell assembly 20. At least part of the spacer 30 is attached to the weak region 201, or an air channel is provided between the spacer 30 and the weak region 201, so that when the housing 10 is filled with glue 200, the weak region 201 is isolated from the glue 200 to ensure that the weak region 201 and the spacer 30 form a pressure relief channel for the gas to flow. The pressure relief part 11 is a vent structure arranged on the housing 10. In one embodiment, at least a part, facing the pressure relief part 11, of the spacer 30 is attached to the inner wall of the housing 10, so that the spacer 30 and the pressure relief part 11 are attached to each other. Furthermore, the spacer 30 and the pressure relief part 11 form a pressure relief channel for the gas to flow. It is understandable that, in other embodiments, the spacer 30 may also extend into the pressure relief part 11, so that the spacer 30 and the pressure relief part 11 extend, thereby preventing the glue 200 from entering the pressure relief part 11 and forming a pressure relief channel for the gas to flow between the spacer 30 and the pressure relief part 11.

The top seal 211 is provided with one of the weak regions 201, and the length of the weak region 201 is the same as that of the top seal 211, but is not limited thereto. For example, in other embodiments, the weak region 201 may also be shorter than top seal 211. The number of the weak region 201 may also be two or other numbers, and these weak regions are arranged on the top seal 211 at intervals.

The number of the cell assembly 20 is six, but is not limited thereto. Every two of the cell assemblies 20 form a group and are attached to each other, and the tabs 23 of the two cell assemblies 20 extend towards each other and are stacked together. An accommodating groove 2111 is formed by the tabs 23 of the two cell assemblies 20 and the top seal 211. The number of the spacers 30 is three. One of the spacers 30 is disposed in the accommodating groove 2111 between two of the cell assemblies 20. The spacer 30 is attached to the weak region 201 on the top seal 211 of the two cell assemblies 20. It is understandable that, in other embodiments, the number of the cell assemblies 20 may also be one, two, or other numbers.

The cell assembly 20 further comprises a bracket 25. The side, away from the top seal 211, of the tab 23, is disposed on the bracket 25, and the bracket 25 is used to support the tab 23. The bracket 25 presses the spacer 30 on the top seal 211. It is understandable that, in other embodiments, the spacer 30 may also be fixed to the cell assembly 20 by bonding, and the bonding position avoids the weak region 201 on the top seal 211.

The number of the pressure relief parts 11 on the housing 10 is six. Three of the pressure relief parts 11 are located on one side of the cell assembly 20, and the other three pressure relief parts 11 are located on the other side of the cell assembly 20.

Protruding parts 31 are formed on both ends of the spacer 30. The protruding part 31 protrudes from both ends of the top seal 211 and extends toward the pressure relief part 11, so that the protruding part 31 is attached to the pressure relief part 1.

It is understandable that, in other embodiments, the spacer 30 may also be provided with a protruding part 31 at only one end. Accordingly, the housing 10 is provided with the pressure relieve part 11 beside one side, corresponding to the protruding part 31, of the cell assembly 20, as long as the gas in the cell assembly 20 is discharged out of the battery pack 100 after passing through the pressure relieve channel formed between the weak region 201 and the spacer 30 and passing through a pressure relief channel formed by the protruding part 31 and the pressure relief part 11.

The side seal 213 of the cell assembly 20 is provided with at least one weak region 203. The spacer 40 is arranged inside the housing 10 and is attached to the weak region 203 on the side seal 213, so that when the housing 10 is filled with glue 200, the weak region 203 is isolated from the glue 200 to ensure that the weak region 203 and the spacer 40 form a pressure relief channel for gas to flow. Specifically, the spacer 40 is disposed on a side surface 215 of the cell assembly 20, and the side surface 215 is connected to the top seal 211 and the two of the side seals 213, respectively. The side surfaces 215 of two opposite cell assemblies 20 in two sets of the cell assemblies 20 are spaced apart to form a gap 205, and the spacer 40 fills the gap 205, but it is not limited thereto. It is understandable that, in other embodiments, the side surfaces 215 of the two opposite cell assemblies 20 in the two sets of cell assemblies 20 may also be attached to each other. In other embodiments, the spacer 40 may be also in a structure similar to that of the spacer 30, specifically in a bar-shaped block structure, and the spacer 40 may also be bonded to the side seal 213 of the cell assembly 20.

An avoidance hole 43 is formed in the spacer 40 to leave a space for the cell assembly 20 to deform. It is understandable that, in other embodiments, it is possible to omit the avoidance hole 43.

The pressure relief part 13 is a through hole structure formed in the housing 10. The spacer 40 is provided with a protruding part 41 toward one side of the pressure relief part 13. The protruding part 41 protrudes from the side seal 213 and extends toward the pressure relief part 13 to be attached to the inner wall of the housing 10, so that the spacer 40 is attached to the pressure relief part 13 and a pressure relief channel for gas to flow is thus formed between the spacer 40 and the pressure relief part 13. It is understandable that, in other embodiments, the protruding part 41 may also extend into the pressure relief part 13, so that the spacer 40 and the pressure relief part 13 are extended.

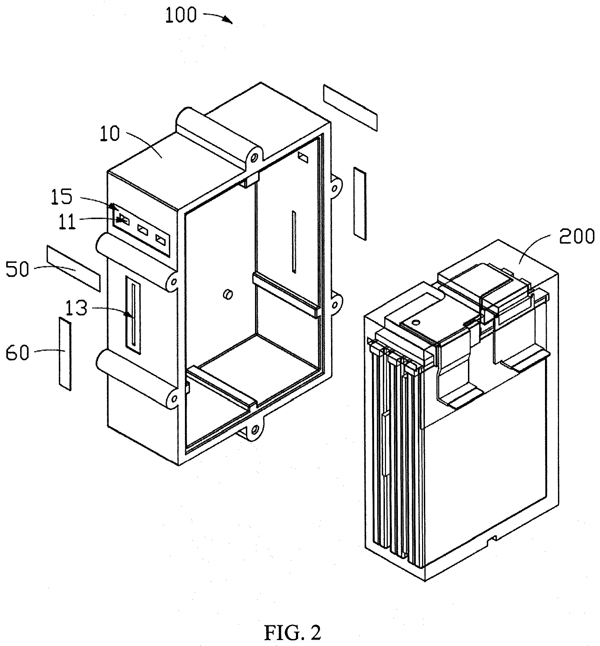

Referring to Figs 1 and 2 at the same time, the battery pack 100 with a pressure relief structure further comprises an adhesive tape 50 and an adhesive tape 60. The adhesive tape 50 and the adhesive tape 60 are respectively in a dust-proof and waterproof structure, so as to prevent dust, liquids or the like from entering the interior of the battery pack 100. The adhesive tape 50 and the adhesive tape 60 are respectively in a tape-like, sheet-like or film-like structure with a viscous substance on one side. The adhesive tape 50 is bonded to the exterior of the housing 10 and covers the pressure relief part 11. The adhesive tape 60 is bonded to the exterior of the housing 10 and covers the pressure relief part 13. The gas inside the cell assembly 20 impacts the adhesive tape 50 and the adhesive tape 60 by means of the pressure relief part 11 and the pressure relief part 13, so that the adhesive tape 50 and the adhesive tape 60 are completely or partially detached from the housing 10.

In order to further make the adhesive tape 50 and the adhesive tape 60 easily detach from the housing 10, cutter lines (not shown) are formed in the adhesive tape 50 and the adhesive tape 60 respectively, so that the adhesive tape 50 and the adhesive tape 60 crack at the cutter lines when the tapes are impacted by the gas. It is understandable that, in other embodiments, it is possible to omit the cutter line.

The housing 10 is also provided with a plurality of grooves 15 to accommodate the adhesive tape 50 and the adhesive tape 60. It is understandable that, in other embodiments, it is possible to omit the groove 15.

It is understandable that the housing 10 is not limited to using the adhesive tape 50 and the adhesive tape 60 to cover the pressure relief part 11 and the pressure relief part 13. For example, in another example, the pressure relief part may also be a weak structure (not shown) arranged on the housing 10 and detached from the housing when being impacted by the gas in the cell assembly 20. The pressure relief part may be molded on the housing 10, for example, the pressure relief part may be provided with a cutter line at a molded connection, so that the pressure relief part is easily broken at the cutter line when the pressure relief part is impacted by gas, then the pressure relief part is disconnected from the housing 10, and the gas inside the cell assembly 20 is discharged from the battery pack 100. In another embodiment, a structure such as a cutter line or a groove may also be directly formed in the housing 10 to form a weak structure thinner than the housing 10, so that the connection strength between the pressure relief part and the housing 10 is weakened, and the pressure relief part is easy to crack when being impacted by gas, thus discharging gas from the battery pack 100.

It is understandable that, in other embodiments, the battery pack 100 may also comprise only the spacer 30 or only the spacer 40. Correspondingly, it is also possible to omit the pressure relief part 11 or the pressure relief part 13. The number of the spacers 30 and the spacers 40 is set according to the number of the cell assemblies 20 and the number of weak regions formed in the cell assemblies 20.

The weak region 201 and the weak region 203 are respectively the weak regions formed at packaging interfaces of the cell assemblies 20 during packaging, but are not limited thereto. It is understandable that the weak region on the battery pack 100 is not limited to being formed in the top seal 211 and the side seal 213. The weak region may also be a weak structure that is designed on the cell body 21 and is easy to discharge the gas generated inside when the weak region is abnormal. The spacer 30 or the spacer 40 may also be arranged between a second side of the cell assembly 20 and the housing 10. The second side is a region other than regions at one side of each of the top seal 211 and the side seal 213 of the cell assembly 20. The second side of the cell assembly 20 is provided with the weak structure, so that the gas is discharged from the cell assembly 20 through the weak structure, and flows to the pressure relief part 11 or the pressure relieve part 13 through the spacer 30 or the spacer 40 and is thus discharged from the housing 10. For example, in other embodiments, the weak region may also be formed in the side surface 215 of the cell body 21, and the spacer 40 is attached to the weak region on the side surface 215 to isolate the weak region from the glue 200. The gas inside the cell assembly 20 is discharged from the battery pack 100 through the weak region on the side surface 215, the spacer 40 and the pressure relief part 13 on the housing 10.

The battery pack 100 is provided with the spacer 30/40 with the air vent, the spacer 30/40 is arranged between the first side of the cell assembly 20 and the housing 10, and the glue 200 is filled in the gap between at least partial regions outside the first side of the cell assembly 20 and the housing 10, so that no glue 200 exists between the spacer 30/40 and the cell assembly 20 and a pressure relief channel for gas is formed. The housing 10 is provided with the pressure relief part 11/13 which is in contact with the spacer 30/40 or has an air channel therewith, so that no glue 200 exists between the spacer 30/40 and the pressure relieve part 11/13 and a pressure relief channel for gas is formed. Therefore, gas in the cell battery 20 is discharged out of the cell assembly 20, and then discharged out of the battery pack 100 through the pressure relief channel, the air vent and the pressure relief part 11/13.

The above embodiments are merely used to illustrate, instead of limiting, the technical solution of the application.

## Claims

1. A battery pack with a pressure relief structure, comprising:
a housing (10) provided with an accommodating cavity (101); and
a cell assembly (20) accommodated in the accommodating cavity (101);
the battery pack (100) further comprising
a spacer (30, 40) arranged between a first side of the cell assembly (20) and the housing (10) and provided with an air vent;
a pressure relief part (11, 13) arranged on the housing (10), wherein the pressure relief part (11, 13) is in contact with the spacer (30, 40) or an air channel is formed therebetween; **characterized by**
a glue (200) filling in a gap between at least partial regions outside the first side of the cell assembly (20) and the housing (10) for fixing the cell assembly (20) and the housing (10),
wherein the cell assembly (20) comprises a cell body (21) and a tab (23);
the cell body (21) is provided with a top seal (211) at the first side;
the tab (23) is arranged in the cell body (21) and extends out of one side of the top seal (211);
the top seal (211) is provided with at least one weak region (201) enabling gas in the cell body (21) to flow out of the cell body (21) when the weak region (201) is impacted by the gas; and
the spacer (30) is arranged between the top seal (211) and the housing (10) and separates the glue from the weak region (201).

2. The battery pack according to claim 1, wherein the spacer (30) is attached to the weak region (201) on the top seal (211) or an air channel is formed between the spacer (30) and the weak region (201); the spacer (30) is provided with a protruding part (31), and the protruding part (31) protrudes from the top seal (211) and extends to the pressure relief part (11).

3. The battery pack according to claim 2, wherein the cell assembly (20) further comprises a bracket (25) supporting the tab (23), and the bracket (25) presses the spacer (30) on the top seal (211).

4. The battery pack according to any one of claims 1 to 3, wherein
at least one side seal (213) is arranged at the first side of the cell body (21), and the at least one side seal (213) is located at one side of the tab (23); and
the at least one side seal (213) is provided with at least one weak region (203) enabling gas in the cell body (21) to flow out of the cell body (21) when the weak region (203) is impacted by the gas; and
the spacer (40) is arranged between the at least one side seal (213) and the housing (10) and separates the glue (200) from the weak region (203).

5. The battery pack according to claim 4, wherein the battery pack (100) comprises a plurality of cell assemblies (20), the spacer (40) fills the gap (205) between two of the plurality of cell assemblies (20), and the spacer (40) is provided with an avoidance hole (43) to leave a space for the plurality of cell assemblies to deform.

6. The battery pack according to claim 1, wherein the pressure relief part (11, 13) is an air vent structure arranged on the housing (10), and the spacer (30, 40) at least partially extends into the pressure relief part (11, 13) or is attached thereto.

7. The battery pack according to claim 6, further comprising an adhesive tape (50, 60), and the adhesive tape (50, 60) is bonded to the exterior of the housing (10) and covers the pressure relief part (11, 13).

8. The battery pack according to claim 7, wherein the adhesive tape (50, 60) is in a dustproof and waterproof structure.

9. The battery pack according to claim 7, wherein a cutter line is formed in the adhesive tape.

10. The battery pack according to any one of claims 1 to 9, wherein the glue (200) is filled between a first side of the cell assembly (20) and the housing (10).

## Patentansprüche

1. Batteriepack mit einer Druckentlastungsstruktur, umfassend:
ein Gehäuse (10), das mit einem Aufnahmehohlraum (101) ausgestattet ist; und
eine in dem Aufnahmehohlraum (101) untergebrachte Zellenanordnung (20);
wobei der Batteriepack (100) ferner Folgendes umfasst:
einen Abstandshalter (30, 40), der zwischen einer ersten Seite der Zellenanordnung (20) und dem Gehäuse (10) angeordnet und mit einer Entlüftung versehen ist;
ein am Gehäuse (10) angeordneter Druckentlastungsteil (11, 13), wobei der Druckentlastungsteil (11, 13) in Kontakt mit dem Abstandshalter (30, 40) steht oder ein Luftkanal dazwischen gebildet wird; **gekennzeichnet durch**
einen Klebstoff (200), der einen Spalt zwischen mindestens Teilregionen außerhalb der ersten Seite der Zellenanordnung (20) und dem Gehäuse (10) ausfüllt, um die Zellenanordnung (20) und das Gehäuse (10) zu fixieren,
wobei die Zellenanordnung (20) einen Zellenkörper (21) und eine Lasche (23) umfasst;
der Zellenkörper (21) an der ersten Seite mit einer oberen Dichtung (211) versehen ist;
die Lasche (23) im Zellenkörper (21) angeordnet ist und aus einer Seite der oberen Dichtung (211) herausragt;
die obere Dichtung (211) mit mindestens einer schwachen Region (201) versehen ist, die es dem Gas in dem Zellenkörper (21) ermöglicht, aus dem Zellenkörper (21) herauszufließen, wenn das Gas auf die schwache Region (201) einwirkt; und
der Abstandshalter (30) zwischen der oberen Dichtung (211) und dem Gehäuse (10) angeordnet ist und den Kleber von der schwachen Region (201) trennt.

2. Batteriepack nach Anspruch 1, wobei der Abstandshalter (30) an der schwachen Region (201) an der oberen Dichtung (211) befestigt ist oder ein Luftkanal zwischen dem Abstandshalter (30) und der schwachen Region (201) gebildet ist; der Abstandshalter (30) mit einem vorstehenden Teil (31) versehen ist und der vorstehende Teil (31) von der oberen Dichtung (211) vorsteht und sich zu dem Druckentlastungsteil (11) erstreckt.

3. Batteriepack nach Anspruch 2, wobei die Zellenanordnung (20) ferner eine Halterung (25) umfasst, die die Lasche (23) trägt, und die Halterung (25) den Abstandshalter (30) auf die obere Dichtung (211) drückt.

4. Batteriepack nach einem der Ansprüche 1 bis 3, wobei
mindestenseine Seitendichtung (213) an der ersten Seite des Zellenkörpers (21) angeordnet ist, und die mindestens eine Seitendichtung (213) an einer Seite der Lasche (23) angeordnet ist; und
diemindestens eine Seitendichtung (213) mit mindestens einer schwachen Region (203) versehen ist, die es dem Gas in dem Zellenkörper (21) ermöglicht, aus dem Zellenkörper (21) herauszufließen, wenn das Gas auf die schwache Region (203) einwirkt; und
der Abstandshalter (40) zwischen der mindestens einen Seitendichtung (213) und dem Gehäuse (10) angeordnet ist und den Kleber (200) von der schwachen Region (203) trennt.

5. Batteriepack nach Anspruch 4, wobei der Batteriepack (100) eine Vielzahl von Zellenanordnungen (20) umfasst, der Abstandshalter (40) den Spalt (205) zwischen zwei der Vielzahl von Zellenanordnungen (20) füllt und der Abstandshalter (40) mit einem Ausweichloch (43) versehen ist, um einen Raum für die Vielzahl von Zellenanordnungen zur Verformung zu lassen.

6. Batteriepack nach Anspruch 1, wobei der Druckentlastungsteil (11, 13) eine am Gehäuse (10) angeordnete Entlüftungsstruktur ist und der Abstandshalter (30, 40) mindestens teilweise in den Druckentlastungsteil (11, 13) hineinragt oder an diesem befestigt ist.

7. Batteriepack nach Anspruch 6, ferner umfassend ein Klebeband (50, 60), wobei das Klebeband (50, 60) auf die Außenseite des Gehäuses (10) geklebt ist und den Druckentlastungsteil (11, 13) abdeckt.

8. Batteriepack nach Anspruch 7, wobei das Klebeband (50, 60) eine staub- und wasserdichte Struktur aufweist.

9. Batteriepack nach Anspruch 7, wobei in dem Klebeband eine Schnittlinie ausgebildet ist.

10. Batteriepack nach einem der Ansprüche 1 bis 9, wobei der Klebstoff (200) zwischen einer ersten Seite der Zellenanordnung (20) und dem Gehäuse (10) eingefüllt wird.

## Revendications

1. Bloc-batterie avec une structure de décompression, comprenant :
un boîtier (10) pourvu d'une cavité de logement (101) ; et
un ensemble élément (20) logé dans la cavité de logement (101) ;
le bloc-batterie (100) comprenant en outre
un élément d'espacement (30, 40) disposé entre un premier côté de l'ensemble élément (20) et le boîtier (10) et pourvu d'un évent ;
une pièce de décompression (11, 13) disposée sur le boîtier (10), dans lequel la pièce de décompression (11, 13) est en contact avec l'élément d'espacement (30, 40) ou un canal d'air est formé entre les deux ; **caractérisé par**
une colle (200) remplissant un espace entre au moins des régions partielles à l'extérieur du premier côté de l'ensemble élément (20) et le boîtier (10) pour fixer l'ensemble élément (20) et le boîtier (10),
dans lequel l'ensemble élément (20) comprend un corps d'élément (21) et une languette (23) ;
le corps d'élément (21) est pourvu d'un joint supérieur (211) sur le premier côté ;
la languette (23) est disposée dans le corps d'élément (21) et s'étend vers l'extérieur d'un côté du joint supérieur (211) ;
le joint supérieur (211) est pourvu d'au moins une zone faible (201) permettant au gaz dans le corps d'élément (21) de s'écouler hors du corps d'élément (21) lorsque la zone faible (201) est touchée par le gaz ; et
l'élément d'espacement (30) est disposé entre le joint supérieur (211) et le boîtier (10) et sépare la colle de la zone faible (201).

2. Bloc-batterie selon la revendication 1, dans lequel l'élément d'espacement (30) est fixé à la zone faible (201) sur le joint supérieur (211) ou un canal d'air est formé entre l'élément d'espacement (30) et la zone faible (201) ; l'élément d'espacement (30) est pourvu d'une partie saillante (31), et la partie saillante (31) dépasse du joint supérieur (211) et s'étend jusqu'à la partie de décompression (11).

3. Bloc-batterie selon la revendication 2, dans lequel l'ensemble élément (20) comprend en outre un support (25) soutenant la languette (23), et le support (25) presse l'élément d'espacement (30) sur le joint supérieur (211).

4. Bloc-batterie selon l'une quelconque des revendications 1 à 3, dans lequel
au moins un joint latéral (213) est disposé sur le premier côté du corps d'élément (21), et l'au moins un joint latéral (213) est situé sur un côté de la languette (23); et
l'au moins un joint latéral (213) est pourvu d'au moins une zone faible (203) permettant à un gaz dans le corps d'élément (21) de s'écouler hors du corps d'élément (21) lorsque la zone faible (203) est touchée par le gaz ; et
l'élément d'espacement (40) est disposé entre l'au moins un joint latéral (213) et le boîtier (10) et sépare la colle (200) de la zone faible (203).

5. Bloc-batterie selon la revendication 4, dans lequel le bloc-batterie (100) comprend une pluralité d'ensembles éléments (20), l'élément d'espacement (40) remplit l'espace (205) entre deux de la pluralité d'ensembles éléments (20), et l'élément d'espacement (40) est pourvu d'un trou d'évitement (43) pour laisser un espace à la pluralité d'ensembles éléments pour qu'ils se déforment.

6. Bloc-batterie selon la revendication 1, dans lequel la pièce de décompression (11, 13) est une structure d'évent disposée sur le boîtier (10), et l'élément d'espacement (30, 40) s'étend au moins partiellement dans la pièce de décompression (11, 13) ou est fixé à celle-ci.

7. Bloc-batterie selon la revendication 6, comprenant en outre un ruban adhésif (50, 60), et le ruban adhésif (50, 60) est collé à l'extérieur du boîtier (10) et recouvre la pièce de décompression (11, 13).

8. Bloc-batterie selon la revendication 7, dans lequel la bande adhésive (50, 60) est une structure étanche à la poussière et à l'eau.

9. Bloc-batterie selon la revendication 7, dans lequel une ligne de coupe est formée dans la bande adhésive.

10. Bloc-batterie selon l'une quelconque des revendications 1 à 9, dans lequel la colle (200) est remplie entre un premier côté de l'ensemble élément (20) et le boîtier (10).
